# EUROPÄISCHE PATENTANMELDUNG

(11) **EP 3 154 169 A1**
(43) Veröffentlichungstag der Anmeldung: **12.04.2017**
(21) Anmeldenummer: 16191321.5
(22) Anmeldetag: 29.09.2016
(51) Int. Cl.: H02K 9/10, H02K 9/08

(54) **STEIGERUNG DER SCHEINLEISTUNG VON GASGEKÜHLTEN TURBOGENERATOREN DURCH ERHÖHTEN DRUCK IM GEHÄUSE**

(30) Priorität: 07.10.2015 DE 102015219359
(71) Anmelder: Siemens Aktiengesellschaft, 80333 München (DE)
(72) Erfinder: Krol, Thorsten, 47269 Duisburg (DE)

(57) **Zusammenfassung**

Durch die Verwendung einer verbesserten Wellendichtung und/oder Veränderungen des Außengehäuses kann ein luftgekühlter Generator so modifiziert werden, dass er im Überdruck betrieben werden und eine höhere Leistung erzielt werden kann.

## Beschreibung

Die Erfindung betrifft die Steigerung der Leistung von luftgekühlten Generatoren durch einen erhöhten Druck im Gehäuse, insbesondere im Servicefall und einen Generator.

Aufgrund sich bei den Kunden der Energieversorger im Laufe der Zeit ändernden Betriebsbedingungen kommt es häufig vor, dass bestehende Kraftwerke mehr Wirkleistung produzieren und verkaufen können. Um dies zu ermöglichen, können Leistungssteigerungen an den Turbinen durch Steigerung der Wirkungsgrade mittels unterschiedlicher Technologien erreicht werden, wobei oft eine Erhöhung in der Größenordnung von >2% erreicht wird.

Im Kraftwerksneugeschäft achten die Kunden jedoch darauf die neuen Komponenten so genau wie möglich auf die derzeitigen Anforderungen zu geschnitten einzukaufen, um dort die Investitionskosten so gering wie möglich zu halten. Das führt dazu, dass die elektrischen Kraftwerksgeneratoren mit der geforderten Leitung eingebaut werden und in der Regel bzgl. der Scheinleistung keine Marge besitzen, so dass eine weitere Steigerung der Ausgangsleistung durch Erhöhung des Wirkungsgrades nicht mehr möglich ist. Um dennoch das Geschäft mit Leistungssteigerungen von Gasturbinen bzw. Dampfturbinen zu ermöglichen, muss eine Möglichkeit gefunden werden die ausgangsseitige Wirkleistung mit vertretbarem Aufwand zu erhöhen. Dabei ist zu beachten, dass die Gasturbine lediglich Wirkleistung, der Turbogenerator jedoch Wirk- und Blindleistung erzeugt. Diese sind dabei im Generator-Leistungsdiagramm meist thermisch begrenzt. Der sogenannte Leistungsfaktor entspricht dabei dem Kosinus der Winkels zwischen Wirk- und Scheinleistung im Leistungsdiagramm.

Bislang war die Möglichkeit der Leistungssteigerung luftgekühlter Turbogeneratoren auf folgende Weisen möglich:

### A) Geringfügige Steigerung der Wirkleistung

Eine geringe Steigerung der Wirkleistung ist fast immer unter Einschränkung der Blindleistung bzw. durch Beschränkung des Leistungsfaktors möglich, bis dieser den Wert 1 erreicht. In diesem Fall ist ohne Modifizierung des Generators die maximale Wirkleistung des Generators erreicht. Diese Grenze ist jedoch eher theoretisch, da das Kraftwerk auch für den eigenen Betrieb Blindleistung benötigt und diese somit aus dem Netz beziehen müsste.

### B) Große Steigerung der Wirkleistung

Ist eine größere Steigerung der Wirkleistung ohne Erzeugung von Blindleistung erforderlich, befindet sich der Generator in der thermischen Begrenzung der Stator-Wicklung definiert durch die Isolierstoffklasse. Meistens sind eine Stator-Neuwicklung und ggfs. weitere Maßnahmen wie eine Überprüfung der Rotorwicklung auf Hot-Spots und deren Behebung, erforderlich, um den Langzeitbetrieb des Generators unter Berücksichtigung der höheren thermischen und mechanischen Belastung des Generators sicherzustellen. Dies bedeutet oft einen erheblichen zeitlichen und finanziellen Aufwand, so dass die Wirtschaftlichkeit der Maßnahmen zweifelhaft ist.

### C) Steigerung der Scheinleistung bei konstanter Blindleistung

Eine Steigerung der Scheinleistung des Turbogenerators kann durch eine kühlungstechnische Optimierung der Hot-Spots am Ständer bzw. am Rotor erfolgen oder durch Durchführung mehrerer Maßnahmen zur Reduzierung der Verluste einzelner Komponenten. Dies ist oft sehr kostenaufwendig bzw. im Falle einer erforderlichen Stator-Neuwicklung zum Teil designbedingt nicht wirtschaftlich möglich.

### D) Steigerung der Scheinleistung bei konstantem Leistungsfaktor

Eine Leistungssteigerung der Scheinleistung bei konstantem Leistungsfaktor ist nur durch Verbesserung der Kühlung des Generators möglich. Hierzu konnte ein "Chiller" bzw. in warmen, trockenen Gebieten ein "Evaporative Cooler " verwendet werden, die jedoch jeweils ein großer Eingriff in die Kraftwerks - Prozesstechnik darstellen und sehr kostenaufwendig sind.

Als Lösung für mögliche Leistungssteigerungen mit dem größten Nutzen für die Kraftwerksbetreiber wäre Variante D, bei der außer der Stabilitätsgrenze alle kühltechnisch bedingten Beschränkungen verschoben werden können.

Es ist daher Aufgabe der Erfindung die Generatorleistung zu steigern, ohne die oben genannten Probleme.

Die Aufgabe wird gelöst durch ein Verfahren gemäß Anspruch 1 und einen Generator gemäß Anspruch 2.

In den Unteransprüchen sind weitere vorteilhafte Maßnahmen aufgelistet, die beliebig miteinander kombiniert werden können, um weitere Vorteile zu erzielen.

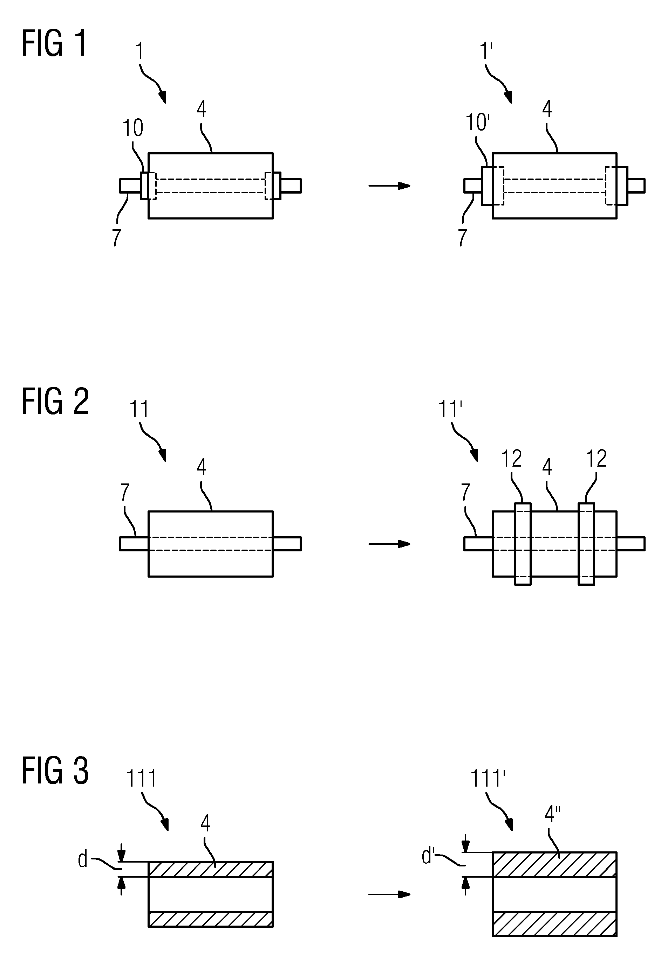

Die Figuren 1, 2 und 3 zeigen Ausführungsbeispiele der Erfindung.

Die Beschreibung und die Figuren stellen nur Ausführungsbeispiele der Erfindung dar.

Die Lösung für eine Leistungssteigerung ist eine Erhöhung des Gasdruckes, insbesondere des Luftdrucks, im Generator 1, 11, 111 und dessen Außengehäuse 4.

Dadurch erhöht sich der kühlende Massenstrom des Gases bzw. der Luft im Generator 1', 11', 111', wodurch die Wärme besser abgeführt werden kann, wobei die Reibungsverluste im Kühlgas jedoch leicht erhöht werden.

Es können in Abhängigkeit des Gasinnendruckes im Generator 1`, 11', 111' Leistungserhöhungen bis 16% oder mehr erzielt werden.

Um den Generator 1`, 11', 111' im Überdruck betreiben zu können, kann zum einen eine Wellendichtung 10' (Fig. 1) eingebracht werden, die den höheren Kühlgasdruck, hier insbesondere Luftdruck, also mindestens 1,20bar (120kPa), insbesondere mindestens 1,50bar (150kPa) oder
im Vergleich zum Umgebungsdruck mindestens 10%, insbesondere mindestens 20% höheren Druck im Außengehäuse 4 aushält.

Ebenso kann das Außengehäuse 4 des Generators 11 durch Verstärkungselemente 12, insbesondere im Servicefall verstärkt werden (Fig. 2), so dass ein mechanisch verstärkter Generator 11' entsteht.

Die Verstärkungselemente 12 sind T- oder Doppel-T-Träger und sind auf das Außengehäuse vorzugsweise aufgeschweißt.

Als Service-Leistung wäre die Leistungssteigerung auch durch einen Gehäusewechsel 4 → 4" (Fig. 3) vergleichsweise schnell und einfach unter Verwendung des bestehenden Aktivteiles möglich. Das modifizierte Außengehäuse 4" des veränderten Generators 111 " ist vorzugsweise dicker (d' > d) oder vorzugsweise mechanisch fester als das vorherige Außengehäuse 4 (Fig. 3 links).

Des Weiteren muss überprüft werden, ob in der bestehenden Stromversorgung des Erregers des Generators 1', 11', 111' ausreichend Potential ist, den erforderlichen höheren Erregerstrom liefern zu können.

Unter Verwendung dieser Lösung entfällt eine aufwendige Stator bzw. Rotor-Neuwicklung. Des Weiteren kann diese Lösung vollständig unabhängig vom Generator-Design der Aktivteilkomponenten eingesetzt werden.

## Patentansprüche

1. Verfahren zur Leistungssteigerung eines Generators (1, 11, 111),
insbesondere im Servicefall,
wobei ein Gas im Inneren des Generators (1, 11, 111; 1`, 11', 111') zur Kühlung verwendet wird,
bei dem eine Wellendichtung (10') des Generators (1) gegen einen Überdruck im Außengehäuse (4) des Generators (1`) von mindestens 120kPa,
insbesondere mindestens 150kPa,
oder
mindestens 10% höheren,
insbesondere mindestens 20% höheren
Umgebungsdruck eingebaut oder ausgetauscht wird
und/oder
das Außengehäuse (4) des Generators (11) durch Verstärkungselemente (12) verstärkt wird (11 → 11')
und/oder
das Außengehäuse (4) des Generators (111) gegen ein mechanisch festeres Gehäuse (111') ausgetauscht wird und
der Generator (1`, 11', 111') im Gasüberdruck betrieben wird.

2. Generator (1', 11', 111'),
der eine Wellendichtung (10') gegen Überdruck im Außengehäuse (4) aufweist
und/oder
dessen Außengehäuse (4) Verstärkungselemente (12) aufweist und/oder
dessen Außengehäuse (4) durch ein dickeres oder mechanisch festeres Außengehäuse (4 ") ausgetauscht wurde oder aufweist.

3. Generator nach Anspruch 2,
bei dem die Wellendichtung (10`) mindestens 120kPa, insbesondere mindestens 150kPa,
abdichtet.

4. Verfahren oder Generator nach Anspruch 1 oder 2,
bei dem die Verstärkungselemente (12) einen T- oder Doppel-T-Träger darstellen und
insbesondere auf das Außengehäuse (4) geschweißt oder gelötet werden oder sind.
